# EUROPEAN PATENT APPLICATION

(11) **EP 3 345 695 A1**
(43) Date of publication of application: **11.07.2018**
(21) Application number: 17382004.4
(22) Date of filing: 05.01.2017
(51) Int. Cl.: B22D 19/16, B22D 21/00, B23P 6/04, C21D 9/50

(54) **METHOD FOR OBTAINING A PART WITH SELF-HEALING PROPERTIES, PART WITH SELF-HEALING PROPERTIES AND METHOD FOR REPAIRING CRACKS OF THE PART**

(71) Applicant: Fundación Tecnalia Research & Innovation, 48160 Derio - Bizkaia (ES)
(72) Inventor: VICARIO GOMEZ, Iban, 48160 Derio - Bizkaia (ES); ABUIN ARICETA, Alberto, 48160 Derio - Bizkaia (ES); CRESPO CAMINO, Ignacio, 48160 Derio - Bizkaia C/ Geldo Edificio 700 (ES)
(74) Representative: Balder IP Law, S.L.

(57) **Abstract**

Method for obtaining a part P with self-healing properties made of at least a first metal 1 having a first melting temperature T1 and a second metal 2 having a second melting temperature T2, the second melting temperature T2 being lower than the first melting temperature T1, which comprises the steps consisting in a) positioning and fixing a structure S made of the second metal 2 in a mold M1, M2, such that the structure S is positioned in a predetermined fixed position in the part P, b) filling the mold M1, M2 with the first metal 1 to complete the part P, c) extracting the part P. The invention also relates to a part obtained with said method and to a method for repairing cracks of the part P.

## Description

### TECHNICAL FIELD

The invention relates to a method for obtaining a part with self-healing properties and more especially to parts comprising a reinforcement material with low melting point such that the part can be repaired by heating the reinforcement material to a temperature below the melting point of the base metallic alloy, but enough to melt the reinforcement, filling the crack or defect.

### STATE OF THE ART

The present disclosure covers internal structures and processing of self-healing metals, including metal matrix composites, which exhibit self-healing behaviour. When these "self-healing" materials are cracked or damaged, a healing agent can be introduced into the damaged area to "heal" the damage.

Self-repairing systems checks the possibility of recovering in a substantial percentage original material properties by a self-repairing process after suffering damage. The damage can be developed by micro-cracks, voids or cracks developed under mechanical or thermal efforts, or other environmental or in service working factors. Wearing, residual stress development and corrosion lie among the characteristic processes that can produce damage in the material. The aim in designing the recovery of damage is to obtain recovered parts with properties above 70-80% of original values with a self-repairing process, undertaken after the occurrence of the damage in the material.

Nowadays there are many challenges in the development of self-repairing metallic alloys, including superficial joining aspects, like the contact angle between liquid/solid phase (wetting angle) and oxidation, and also practical aspects, like the necessary capillary pressure to carry the molten metal to the damaged area or crack, and the final mechanical properties obtained in the composite.

In metals, diffusion rates are significantly smaller in comparison with polymers diffusion rates, due to the strong bonds between the atoms of the metals, which promotes that the self-healing process of metals is much more complex than in metallic systems.

Due to the high melting temperatures of metals, the repair processes have to be carried out at high temperatures or in controlled atmospheres. The reactive nature of metals with oxygen and water further complicates the metal joints due to the rapid formation of oxides on the surfaces that make bonding difficult.

Metal sealing, on the other hand, is usually carried out using methods similar to welding or bonding, which requires the melting of the metal to be bonded or the introduction of a new molten metal. In systems using electro-deposition, the component must be coated with liquid solutions with a specific chemical composition.

Even the method of sealing in the solid state requires high temperatures and a considerable time to obtain the seal. Faced with ceramics or polymer-based materials, oxidation complicates the metal joints, because the new metal when exposed to air or water causes difficulties to obtain the union. Due to the high melting temperatures of metals, these types of repair have to be produced at significantly higher temperatures than in ceramic or polymer-based self-repairing systems.

WO2006061907A1 relates to a defect / cracking repair adhesive consisting of aluminum or aluminum and zinc alloys applicable to metallic dies. The composition of the composite alloy to be obtained and the repair agent is the same. The repairing alloy is injected into the defect, but it is not part of the composite, so it's not an auto repairing system, and the die is normally made by steel or materials with high melting temperature (also called melting point) in comparison with the aluminum and magnesium melting temperature.

EP0902097A1 discloses the use of a Zinc alloy to repair metal molds used to fabricate the composites with the same Zinc alloy used for manufacturing the die. In this case, the way of repairing the zinc alloy mold consists in welding the same zinc alloy, and not by a self-repairing process with different metals.

JPH0488156A again describes an alloy of Zn with a percentage of 10 to 50% of this metal, used to repair metal molds. The purpose is to repair easily a metallic mold without defective welding, pinholes, etc., by solution-annealing a material consisting of a zinc-based alloy having a specified content of aluminum, water-quenching the material to obtain a repairing material and cladding the area of the mold to be repaired with the repairing material heated to a specified temperature. Again, the low melting properties of the material are used, although this document only reflects the state of the art, and it is not a self-repairing system.

US2013017405A1 describes a microcapsule that is disposed in a self-healing coating having zinc powder particles dispersed therein. The microcapsule includes at least a silane coupling agent encapsulated within a volume defined by a metallic or polymeric shell that can break responsive to formation of a fissure in the self-healing coating. This patent is applied only to a coating, and not to a whole part. Also the zinc powders are contained in a metallic or polymeric shell in combination with coupling agents.

US6244497B1 relates to an aluminum alloy rod surrounded by a zinc and aluminum alloy in a proportion of 90% zinc and 10% aluminum. The flux-coated soldering rod is used for repairing and joining aluminum alloy articles and structures, such as heat exchangers for use in automotive applications. The method utilizes a flux-coated soldering rod that is used to deliver a solder alloy and a flux compound to a region to be repaired. The flux compound has a higher melting temperature than the solder alloy, and is present as a coating that sufficiently thermally insulates the alloy to cause the flux compound and the solder alloy to melt nearly simultaneously during the soldering operation. The solder alloy is preferably a zinc-aluminum alloy. The zinc-aluminum alloy permits to repair the aluminum part with good mechanical properties. However the repairing of the part is doing by welding, and it's not a self-repairing material.

CN204809038U refers to a self-priming capacitor from a Zinc coating over an aluminum layer. However, the obtained capacitor is not a cast composite part and the Zn is applied over the aluminum layer by galvanization.

WO2014206277A1 discloses a weather resistant metal support structure. The outer surface of the metal material of the structure has a self-healing protective coating, covered with a zinc alloy. The Zinc alloy consists of 82-85% Zinc and 3-12% aluminum. However in this case also, there is a limitation to the outer Surface of the structure and the zinc is not casted.

US2013340896A1 discloses the internal structures and processes to synthesize the structure of self-healing materials, especially metallic materials, metal matrix micro and nanocomposites. Self-healing is imparted by incorporation of macro, micro or nanosize hollow reinforcements including nanotubes, filled with low melting healing material or incorporation of healing material in pockets within the metallic matrix; the healing material melts and fills the crack. In another concept, macro, micro and nanosize solid reinforcements including ceramic and metallic particles, and shape memory alloys are incorporated into alloy matrices, specially nanostructured alloy matrices, to impart self-healing by applying compressive stresses on the crack or diffusing material into voids to fill them.

The use of ceramic hollow tubes or elements is expensive, and it is necessary to fill the hollow structures with low melting point alloys, which is expensive, complicated and can lead to the inclusion of gases into the parts.

US 6.669.786 B2 discloses surface treatments for aluminum and its alloys, by the development of a boehmite layer and applying an ionic conversion. The obtained surface exhibits a resistance to the corrosion and self-healing effects in surface treatments. However, the application is only for superficial defects.

US 2014/0299231 A1 develops a composite welding metal. It is composed of a matrix with a metal solder base, a capsule dispersed in the solder matrix, and a self-sealing material that is encapsulated in the capsule. The self-sealing material must be configured to react with the matrix in such a way that at least one conductive intermetallic compound is created and converted into a conductive alloy. The introduction of capsules with self-sealing material into welding materials is also disclosed. At least two self-sealing materials are needed in US 2014/0299231.

US2012251777 A1 develops a component for engines in which the component is subjected to at least one of a high temperature, a corrosive atmosphere, an oxidizing atmosphere, a high mechanical load, a cyclic thermal load and transient conditions such that the component prone to crack formation and propagation comprises at least one base material having self-healing system which includes an added active phase having at least one of a melting point depressant and a substance having a softening or a melting point below or within a range of an operating temperature of the component. In this document the active phase is disclosed as dispersed into the component structure, in the form of individual particles, which are dispersed within the base material. The document also discloses the use of other types of particles or fibers with a shell. It is pointed out that casting processing is not included into the manufacturing processes disclosed herein.

US2009036568 A1 describes a self-healing material that comprises a matrix embedded with micro-pockets of a healing-agent releasable by a crack in the matrix. The healing-agent is able to bond to the matrix to repair the crack. The healing-agent is contained in microcapsules. A corresponding catalyst for the healing-agent is embedded in the matrix and contained in a plurality of microcapsules as an emulsion. The emulsion comprises an oil, a perfluorated solvent, a hydrophobic ionic liquid, or mixtures thereof. A method of manufacturing the self-healing material comprises the steps of identifying an operational temperature range of the material, providing at least one substance as the healing-agent, which substance remaining substantially in a liquid state within the operational temperature range, identifying an operational evaporation rate of the healing-agent and providing the substance with a curing time according to the evaporation rate.

US9303171B2 develops a composition, useful for healing cracks in substrate e.g. plastic, rubber, ceramic, coating and metal, compressing nanotubes, healing agent inside the nanotubes, and end caps bound onto both ends of the nanotubes. In this composition it is necessary to have nanotubes and it is not adequate to use them with metals produced by casting methods, due to that nanotubes cannot withstand molten metal and processing parameters. If the proposed agents (i.e. diisocyanates, polyisocyantes...) in the manufacturing process get in contact with molten metal, explosions or gas porosity can occur.

WO9524364A1 develops an oxidation protected refractory metal or composite material product that has a coating of titanium molybdenum silicide reinforcement and a self-healing eutectic phase. The obtained material has a branched microstructure forming a reinforcement within which a healing phase is dispersed consisting of a eutectic mainly made up of unbound silicon, silicide Ti(0.4-0.95)Mo(0.6-0.05)Si₂, and at least disilicide TiSi₂. The coating is produced by depositing a powder mixture on the surface of the material and heat treating it in a neutral atmosphere.

CN103341615A develops a box shell body aluminum casting infiltration leak-repairing method and system in a pressurization mode. According to the technical scheme, alkali washing is carried out on a workpiece provided with tiny needle-shaped cracks and leaking water at 50-60 ºC, oil contamination and dirt on the workpiece are removed, then the workpiece is placed in an infiltration leak-repairing cylinder to be vacuumized to reach 50 millimeters of mercury, air, moisture and ionized impurities in the cracks of the workpiece are extracted, leak-repairing liquid which is composed of water glass, ferric oxide, aluminum oxide, calcium oxide, magnesium oxide, zinc oxide, phosphorus pentoxide and water at the temperature of 50-60ºC is injected into the infiltration cylinder, based on the principles of vacuum and capillaries, the leak-repairing liquid is absorbed and seeps into the cracks of the workpiece, then 5-6 atm. is applied to the leak-repairing liquid in the infiltration cylinder, the leak-repairing liquid further seeps into the cracks under the action of pressure, the cracks are filled with the leak-repairing liquid, and the leak-repairing liquid is heated and cured. Here the whole cast part does not have inside it the self-repairing material. Vacuum and pressure expensive process are also needed to obtain a good cleaning and infiltration of the repairing liquid.

US2011033728A1 describes a method of repairing cracks in a structural material. It involves providing a metallic structure with a known maximum operation temperature. A surface of the metallic structure is coated with a metallic coating having a melting temperature greater than the metallic structure maximum operation temperature. The metallic coating is heated to melting temperature until metallic coating flows. The cracks in the surface are filled with the metallic coating. This patent is based on coating a material. Aluminum and magnesium cast parts have always an external oxide layer, of Al₂O₃ or MgO. The wetting of this external oxide film with other metals is very difficult, due to the low wetting angle of both oxides. Normally a treatment to eliminate the oxide layer is needed to apply a protective surface, increasing the cost and also in conventional aluminum and magnesium cast alloys parts shows intermetallics that become corrosion points.

US2011033728A1 discloses that all the external surface of the part has to be be coated and it is only external.

On the one hand, the state of the art discloses the use of low melting alloys (mainly tin) included in metal matrices that act as repairers thereof. These low melting alloys are not compatible with casting process into metal molds for aluminum or magnesium alloys, due to the high process temperature in the casting process of aluminum and magnesium alloys. On the other hand, it is known to inject Zinc alloys or Zinc compounds in the defects of aluminum or magnesium alloys once the crack has formed.

### DESCRIPTION OF THE INVENTION

For overcoming the prior art drawbacks, the present invention proposes a method for obtaining a part with self-healing properties made of at least a first metal having a first melting temperature and a second metal having a second melting temperature, the second melting temperature being lower than the first melting temperature, which comprises the steps consisting in:
a) positioning and fixing a structure made of the second metal in a mold, such that the structure is positioned in a predetermined fixed position in the part;
b) filling the mold with the first metal to complete the part;
c) extracting the part.

Therefore according to the present invention, and opposite to the known methods, the reinforcing elements are not randomly distributed into the cast part, but instead are located in the areas where they are necessary, obtaining an economy of reinforcing material.

In some embodiments, the structure is previously made by:
- designing the structure;
- casting, 3D printing or machining the structure.

Moreover, the structure can be placed such that in the casting process, the amount of heat transmitted to it does not melt a relevant portion thereof. And by using techniques such as 3D printing, it is possible to control with a high accuracy the heat transmitted to the repairing structure.

Moreover, there is not the necessity for example of obtaining ceramic hollow structures and their filling, because the inserts are directly obtained by the proposed processes. The use of proposed manufacturing processes for the inserts, especially the cast and 3D metallic manufacturing allows obtaining very complex structures, adapting the design to the requirements and shapes of the final piece, reducing the final weight and cost, by optimizing the sealing materials. The structure, that can be for example a vascular network, is not obtained by an empty structure which is then filled with the low melting point metal but is obtained directly with the low melting point metal, having an optimized shape. It is also possible to obtain hollow structures directly by casting or 3D prototyping that allow lightening the pieces.

In some embodiments, step b) is carried out through casting. In the case of casting processes, depending on the process and part design, different temperature, pressure and speed of the metal into the cavity are obtained. In the case of our patent, the inserts should be designed in order to withstand the different process parameters for a specific casting process. For example, in High Pressure Die Casting (HPDC), that is one of the most employed process to produce non-ferrous casting, inserts should withstand pressures up to 120 MPa, 100 m/s injection speeds and motel metal temperature up to 720ºC. However, the cooling speed of the part is very quick, with cooling rates of about 100ºC per second, what it makes that the selected low melting temperature metal inserts remains functional into the cast part.

Other casting technologies as low pressure die casting and gravity permanent mold casting have low rate velocities (up to 1 m/s) and low pressures. In these processes cooling rates are about 10ºC per second, what it makes also that low melting temperature metal inserts remains functional.

In the case of sand casting, cooling rate is smaller, with approximate values of 1 ºC per second. In this casting process, where the cast material is in contact with the insert for a long time at high temperatures, the insert is designed, in order to obtain a functional part, despite some areas of the insert can be melted by cast metal.

So, internal low melting point inserts resist better inalterable the casting process where a metallic die is used, due to the higher thermal conductivity of metals in comparison with sand or ceramic molds.

In other embodiments, step b) is carried out through 3D printing. In the foundry process and also in the 3D prototyping, when adding the high melting point metal to the insert, there is the possibility of dissolving the inserts into the high melting point matrix. Because of that, many of the previous developments give a protective surface to the self-healing material to withstand process parameters. In the case of 3D metal printing in general, the area and temperature where the high melting point metal is deposited are small in the case of the application area, and high temperatures are punctual, what allows a good dispersion of thermal heat to the rest of the insert and part without destroying the inserts.

In some embodiments, step a) is carried out by:
a.1) fixing the structure directly to the mold; or
a.2) fixing the structure to the mold through interposed fixing elements; or
a.3) partly fixing the structure directly to the mold and partly fixing the structure to the mold through interposed fixing elements.

In some embodiments, the structure is in direct contact with the first metal, or in other words, the structure does not comprise any exterior coating or envelope.

In some embodiments, the structure is a vascular net, a plurality of punctual inserts or a combination thereof. In the first case it is possible to reach all the part, the second one will be more appropriate when the most stressed points have been previously identified.

In some embodiments, the vascular net and the part have substantially the same geometric envelope, such that the self-healing capacity extends to the whole part.

In some embodiments, the second metal is Zn or a Zn based alloy. In the case of Zn, the surface of the pure metal tarnishes quickly, eventually forming a protective passivating surface layer of the basic zinc carbonate, Zn₅(OH)₆(CO₃)₂, by reaction with atmospheric carbon dioxide. This layer helps prevent further reaction with air and water, and also increases naturally the initial resistance to molten metals when acting as inserts. Pure Zn has a melting temperature of 419,5ºC, and depending on the zinc alloy, melting temperature range varies from 379 to 390ºC in the most casting zinc alloys. The same effect of developing naturally a protective passivating layer is common in other cast or 3D produced metals, as Aluminum and Magnesium alloys, where they surface is covered respectively with a thin aluminum oxide (Al₂O₃) and magnesium oxide (MgO).

In some embodiments, the first metal is Aluminium, Magnesium, an Aluminium alloy, a Magnesium alloy or a combination thereof.

The invention, according to a second aspect, is directed to a part made of a matrix made of a first metal having a first melting temperature and a second metal having a second melting temperature embedded in the matrix, the second melting temperature being lower than the first melting temperature, wherein the second metal is a structure positioned and fixed in the matrix according to a predetermined design.

In some embodiments of the part, the structure is in direct contact with the first metal.

In some embodiments of the part, the structure is a vascular net, a plurality of punctual inserts or a combination thereof.

In some embodiments of the part, the vascular net and the part have substantially the same geometric envelope.

In some embodiments of the part, the second metal is Zn or a Zn based alloy.

In some embodiments of the part, the first metal is Aluminium, Magnesium, an Aluminium alloy, a Magnesium alloy or a combination thereof.

According to a third aspect, the invention relates to a method for repairing cracks of a part according to any of the variants disclosed previously according to the second aspect of the invention, comprising the steps of:
I. Inspecting the part and determining the damaged area;
II. Heating at least the damaged area of the part above the second melting temperature and below the first melting temperature and until said second metal flows such that the cracks and internal porosity are at least partially filled with said second metal.

In some embodiments, the method for repairing cracks comprises between steps I and II a further step of placing an external barrier in the crack to avoid the scape of the second metal from the part.

In some embodiments, the method for repairing cracks comprises before step II a further step of deformation of the damaged area to close the crack as much as possible.

In some embodiments, in the method for repairing cracks the heating of step II is carried out by an external field, the external field including thermal, electromagnetic, vibration, ultrasonic or acoustic waves, centrifugation, plasma and/or laser.

Finally, in some embodiments of the method, steps I and II are iterated until complete healing of the part.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a preform or structure made of the second metal consisting of a simplified vascular net.
Figure 2 shows the placement of the structure in a fixed and predetermined location and orientation into the mold.
Figure 3 shows the part, once the mold has been filled with the first metal forming the matrix having the upper melting temperature.
Figure 4 shows the part in use, where a crack has appeared.
Figure 5 shows an arrangement with a vascular net type structure fixed to the mold through inserts.
Figure 6 shows an arrangement with a punctual type structure fixed to the mold through inserts.
Figure 7 is a combination of the solutions depicted in FIGS. 5 and 6.

### DESCRIPTION OF A WAY OF CARRYING OUT THE INVENTION

The figures show different arrangements corresponding to the steps of a method for obtaining a part P with self-healing properties made of at least a first metal 1 having a first melting temperature T1 and a second metal 2 having a second melting temperature T2, the second melting temperature T2 being lower than the first melting temperature T1.

These features being known, according to the present invention the present method comprises the steps of:
a) positioning and fixing a structure S made of the second metal 2 in a mold M1, M2, such that the structure S is positioned in a predetermined fixed position in the part P;
b) filling the mold M1, M2 with the first metal 1 to complete the part P;
c) extracting the part P.

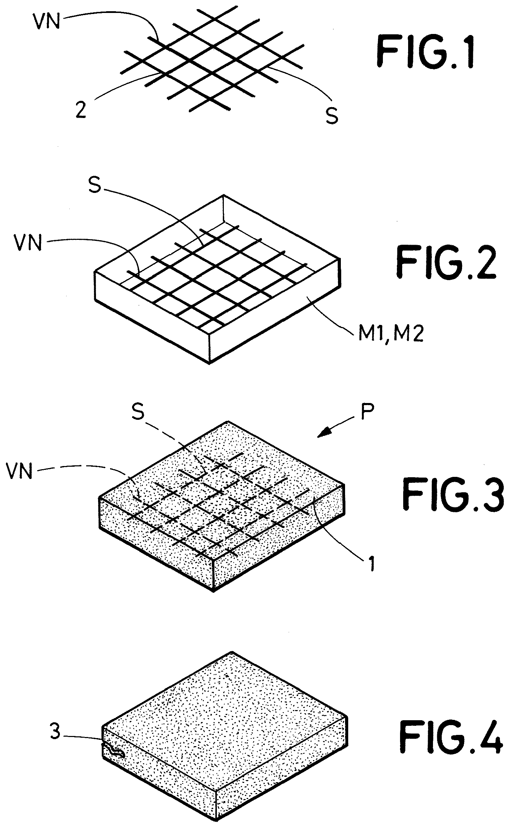

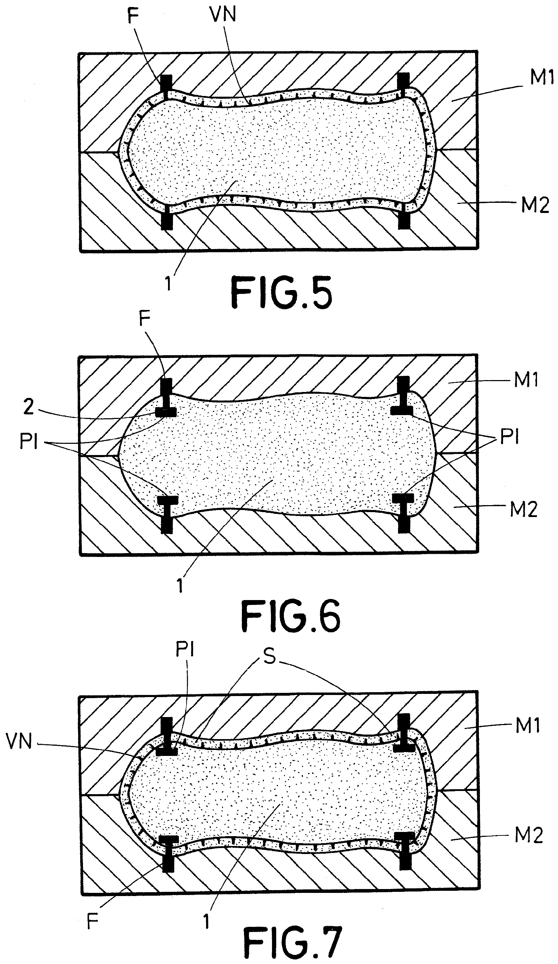

Step a) can be carried out by fixing the structure S directly to the mold M1, M2, as shown for example in FIGS. 1 to 4 or, as shown in FIGS. 5 to 7, fixing the structure S to the mold M1, M2 through interposed fixing elements F.

Another possibility would be partly fixing the structure S directly to the mold M1, M2 and partly fixing the structure S to the mold M1, M2 through interposed fixing elements F.

According to an embodiment and as shown in FIGS. 1 to 4, or FIG. 6, the structure S is a vascular net VN.

According to another embodiment, shown in FIG. 6, the structure consists of a plurality of punctual inserts PI.

The invention also relates to a method for repairing cracks 3 (see FIG. 4) of a part P according to any of the inventive variants disclosed therein, comprising the steps of:
I. Inspecting the part P and determining the damaged area;
II. Heating at least the damaged area of the part P above the second melting temperature T2 and below the first melting temperature T1 and until said second metal 2 flows such that the cracks and internal porosity are at least partially filled with said second metal 2.

In accordance with the present invention, the structure S must be able to windstand (i.e. not melt) the maximum operating temperature that the base metal is expected to encounter during its useful service life in an application. At the same time, the repairing metal, i.e. the second metal, must be able to melt and flow at a temperature that is greater than the above-noted maximum operating temperature of base material. For many applications, the melt/flow temperature of structure materials will also be less than the aging criteria temperature of base material, although it may be possible to exceed the aging criteria temperature for brief periods of time without damaging base material. For a base material cast from aluminum and magnesium alloys, inserts can be made from a low melting temperature zinc alloy, the formulation of which can be adjusted to satisfy the above-described temperature criteria for a particular application.

Prior to the repair of crack, material will be generally subjected to an inspection in order to detect the crack. Accordingly, the crack repair methodology of the present invention can include inspection (e.g. periodically) of composite cast part P. The particular choice of inspection system/method is not a limitation of the present invention. Furthermore, it is to be understood that an inspection process in not a requirement of the present invention. That is, the crack repair process of the present invention could be implemented automatically, periodically, without ever inspecting for cracks.

Once crack or cracks are detected, the repair of cracks is initiated through the sealing of the external surface of the part are where the crack/cracks have been detected, for example and not limited by applying ceramic blanket or ceramic concrete to avoid low melting point metal to escape from the internal part of the composite cast part to the exterior through the crack, so as to remain all the low melting point metal into the cast composite part. Sometimes prior to the sealing of the crack, a mechanical deformation applied by different methods (for example and no limiting by hammering, cold pressing) in order to close as much as possible the crack and to obtain the original dimensions of composite cast part.

After, the metal matrix cast part is heated. More specifically, heat must be sufficient enough to raise inserts to its melting temperature so that it can begin to flow. However, heat should not raise the temperature of base material above its aging criteria temperature for any amounts of time that might lead to degradation of based metal. Heat can be applied "globally" across all the cast composite part, but it may be more practical to apply heat "locally" in the proximity of the crack. The way to heat the part can be but not limited to electric, gas, induction, plasma, laser heating of the part.

In order to get a better and sometimes quicker flow of low melting point metal to the cracks, vibration, acoustic, ultrasonic, centrifugal external forces can be applied to the part.

In summary, the problem to be solved is the provision of a novel process to obtain self-repairing metal cast parts, by using precisely located Zn alloys for repairing cracks, porosity or other quality problems by heating the to a temperature where the Zn alloy is in a liquid state and the cast metal remains without changes in his properties.

The inserts can be made by casting or 3D prototyping, with the possibility of having very complex shapes, including hollow or cellular shapes. Therefore, what it is obtained is a process to obtain self-repairing cast parts (Aluminum, magnesium) by using lower melting point inserts (Zn alloys) that by heating the parts to a temperature where the Zn alloy is in a liquid state and the cast metal remains without changes in his properties, giving final properties similar to original composite material.

In resume, the system is composed by a metal matrix composite with different optimized embedded structures that at have lower temperature than the liquidus temperature of the metal matrix, i.e. the first metal 1, will be in a liquid or semi-solid state and by capillarity will close cracks and also internal gas or shrinkage porosity, obtaining a better quality in recovered parts.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiments described herein, but also encompasses any variations that may be considered by any person skilled in the art, within the general scope of the invention as defined in the claims.

## Claims

1. Method for obtaining a part (P) with self-healing properties made of at least a first metal (1) having a first melting temperature (T1) and a second metal (2) having a second melting temperature (T2), the second melting temperature (T2) being lower than the first melting temperature (T1), which comprises the steps consisting in:
a) positioning and fixing a structure (S) made of the second metal (2) in a mold (M1, M2), such that the structure (S) is positioned in a predetermined fixed position in the part (P);
b) filling the mold (M1, M2) with the first metal (1) to complete the part (P);
c) extracting the part (P).

2. Method according to claim 1, wherein step b) is carried out through casting or 3D printing.

3. Method according to any of the previous claims, wherein the structure (S) is previously made by:
- designing the structure (S);
- casting, 3D printing or machining the structure.

4. Method according to any of the previous claims, wherein step a) is carried out by:
a.1) fixing the structure (S) directly to the mold (M1, M2); or
a.2) fixing the structure (S) to the mold (M1, M2) through interposed fixing elements (F); or
a.3) partly fixing the structure (S) directly to the mold (M1, M2) and partly fixing the structure (S) to the mold (M1, M2) through interposed fixing elements (F).

5. Method according to any of the previous claims, the structure (S) is in direct contact with the first metal (1).

6. Method according to any of the previous claims, wherein the structure (S) is a vascular net (VN), a plurality of punctual inserts (PI) or a combination thereof.

7. Method according to claim 6, wherein the vascular net (VN) and the part (P) have substantially the same geometric envelope.

8. Method according to any of the previous claims, wherein the second metal (1) is Zn or a Zn based alloy.

9. Method according to any of the previous claims, wherein the first metal (2) is Aluminium, Magnesium, an Aluminium alloy, a Magnesium alloy or a combination thereof.

10. Part (P) made of a matrix (M) made of a first metal (1) having a first melting temperature (T1) and a second metal (2) having a second melting temperature (T2) embedded in the matrix, the second melting temperature (T2) being lower than the first melting temperature (T1), **characterised in that** the second metal (2) is a structure (S) positioned and fixed in the matrix (M) according to a predetermined design.

11. Part according to claim 10, wherein the structure (S) is in direct contact with the first metal (1).

12. Part according to claim 10 or claim 11, wherein the structure (S) is a vascular net (VN), a plurality of punctual inserts (PI) or a combination thereof.

13. Part according to claim 12, wherein the vascular net (VN) and the part (P) have substantially the same geometric envelope.

14. Part according to any of claims 10 to 13, wherein the second metal (1) is Zn or a Zn based alloy.

15. Part according to any of claims 10 to 14, wherein the first metal (2) is Aluminium, Magnesium, an Aluminium alloy, a Magnesium alloy or a combination thereof.

16. Method for repairing cracks (3) of a part (P) according to any of claims 10 to 15, comprising the steps of:
I. Inspecting the part (P) and determining the damaged area (3);
II. Heating at least the damaged area (3) of the part (P) above the second melting temperature (T2) and below the first melting temperature (T1) and until said second metal (2) flows such that the cracks and internal porosity are at least partially filled with said second metal (2).

17. Method according to claim 16, comprising between steps I and II a further step of placing an external barrier in the crack to avoid the scape of the second metal (2) from the part (P).

18. Method according to claim 16 or claim 17, which comprises before step II a further step of deformation of the damaged area to close the crack as much as possible.

19. Method according to any of claims 16 to 18, wherein the heating of step II is carried out by an external field, the external field including thermal, electromagnetic, vibration, ultrasonic or acoustic waves, centrifugation, plasma and/or laser.

20. Method according to any of claims 16 to 19, wherein steps I and II are iterated until complete healing of the part (P).
